# EUROPÄISCHE PATENTANMELDUNG

(11) **EP 3 462 582 A1**
(43) Veröffentlichungstag der Anmeldung: **03.04.2019**
(21) Anmeldenummer: 18192214.7
(22) Anmeldetag: 03.09.2018
(51) Int. Cl.: H02K 15/03, H02K 1/27

(54) **PERMANENTMAGNETROTOR, VERFAHREN ZU SEINER HERSTELLUNG UND MAGNETISIERUNGSVORRICHTUNG**

(30) Priorität: 28.09.2017 DE 102017217282
(71) Anmelder: Bühler Motor GmbH, 90459 Nürnberg (DE)
(72) Erfinder: Günther, Heinz, 90522 Oberasbach (DE); Suttner-Reimann, Armin, 91126 Schwabach (DE); Zec, Mladen, 90491 Nürnberg (DE)

(57) **Zusammenfassung**

Die Erfindung betrifft einen Permanentmagnetrotor (1) mit einem magnetisch leitenden Magnetkern (2), welcher eine Mehrzahl Magnetaufnahmen (3, 4) für radial angeordnete und im Wesentlichen tangential magnetisierte Permanentmagnetstücke (9) hat und ein Verfahren zu seiner Herstellung. Aufgabe der vorliegenden Erfindung ist es bei einem gattungsgemäßen Permanentmagnetrotor für eine einfache Montage bei einer geringen Anzahl von zu montierenden Bauteilen, eine sehr gute Magnetisierbarkeit, für eine hohe Festigkeit der mechanischen Verbindung der Permanentmagnetstücke in den Magnetaufnahmen und für eine geringe Baugrösse zu sorgen. Diese Aufgabe wird erfindungsgemäß durch die Merkmale des Anspruchs 1, des Verfahrens gemäß Anspruch 9 oder 10 und der Vorrichtung gemäß Anspruch 14 gelöst.

## Beschreibung

Die Erfindung betrifft einen Permanentmagnetrotor (1) mit einem magnetisch leitenden Magnetkern (2), welcher eine Mehrzahl Magnetaufnahmen (3, 4) für radial angeordnete und im Wesentlichen tangential magnetisierte Permanentmagnetstücke (9) hat und ein Verfahren zu seiner Herstellung.

Ein gattungsgemäßer Permanentmagnetrotor ist beispielhaft aus der EP 3 054 466 A1 bekannt, bei dem die Permanentmagnetstücke tangential magnetisiert in Magnetaufnahmen eines Magnetkerns aufgenommen sind.

Aus der DE 10 2015 222 271 A1 ist ein Permanentmagnetrotor bekannt, welcher aus einem magnetisch leitenden Magnetkern mit einer Vielzahl von Magnetaufnahmen in Form von Magnettaschen besteht. Permanentmagnetstücke erstrecken sich axial über zwei Teilkerne in gerader Linie. Dadurch lässt sich die Gesamtzahl der zu montierenden Teile deutlich reduzieren. Nachteilig ist dabei, dass sich die Teilkerne durch die montierten Permanentmagnetstücke nicht gegeneinander verdrehen lassen. Zur Verringerung des Rastmoments zwischen Rotor und Stator eines Elektromotors sind deshalb die Polflächen der beiden Teilkerne des Permanentmagnetrotors unterschiedlich geformt. Um die Magnete magnetisieren zu können müssen die Magnete entweder vor der Montage oder der gesamte Rotor nach der Montage magnetisiert werden. Beide Möglichkeiten weisen erhebliche Nachteile auf. Bei der Vorab-Magnetisierung ist es sehr schwierig die Magnete zu montieren, vor allem bei Verwendung von Seltenerd-Magneten. Ein vormontierter Permanentmagnetrotor lässt sich zwar von außen magnetisieren, die erzielbare Magnetfeldstärke ist jedoch durch Sättigungseffekte im Eisenkern begrenzt, so dass Teilbereiche der Magnete nicht vollständig magnetisiert werden.

Aufgabe der vorliegenden Erfindung ist es daher bei einem gattungsgemäßen Permanentmagnetrotor für eine einfache Montage bei einer geringen Anzahl von zu montierenden Bauteilen, eine sehr gute Magnetisierbarkeit, für eine hohe Festigkeit der mechanischen Verbindung der Permanentmagnetstücke in den Magnetaufnahmen und für eine geringe Baugrösse zu sorgen.

Diese Aufgabe wird erfindungsgemäß durch die Merkmale des Anspruchs 1, der Verfahren gemäß Ansprüche 9 oder 10 sowie durch eine Magnetisierungsvorrichtung gemäß Anspruch 14 gelöst. Da die Magnete radial angeordnet sind, ist generell ein stärkeres Magnetfeld erzielbar. Zudem lassen sich Magnetisierungsspulen leichter an den jeweils zu magnetisierenden Permanentmagneten heranführen und der zu überwindende Eisenanteil liegt in Magnetisierungsrichtung und unterstützt die Magnetflussführung.

Weiterbildungen der Erfindung werden in den Unteransprüchen dargestellt. Die beiden Teilkerne erlauben es die Permanentmagnetstücke (9) mit einem ersten Teilkern (5) eine festere mechanische Verbindung eingehen zu lassen als mit einem zweiten Teilkern (5). Dabei besteht die festere Verbindung vorzugsweise bereits bei der Magnetisierung der Permanentmagnetstücke (9). Die weniger feste mechanische Verbindung ist für eine einfache Montage konzipiert. Es soll eine leichte unkomplizierte Montage der beiden Teilkerne mit den vormontierten Permanentmagnetstücken gewährleistet und die Gefahr von Beschädigungen der Permanentmagnetstücke möglichst ausgeschlossen sein. Einführungsschrägen an den Permanentmagnetstücken und/oder den Teilkernen können die Montage zusätzlich erleichtern.

Es ist vorgesehen, dass unterschiedliche Permanentmagnetstücke (9) über den Umfang eines Teilkerns (5) in unterschiedlichen Magnetaufnahmen (3, 4) abwechselnd eine festere und eine weniger feste mechanische Verbindung mit dieser eingehen. Dadurch ist in einem Zwischenschritt jedes vormontierte Permanentmagnetstück von leeren Magnetaufnahmen umgeben.

Die festere mechanische Verbindung wird vorzugsweise durch Umspritzung, durch Kleben, durch Einpressen (Presspassung) oder durch Einklemmen hergestellt oder auch durch eine Kombination dieser Möglichkeiten. Beim Einklemmen sind in der Regel vorspringende Blechzungen innerhalb der Magnetaufnahme biegsam ausgeführt, oft mit Freisparungen zwischen den Blechzungen, welche die Biegsamkeit und ein Stück weit auch eine Verformbarkeit der Blechzungen erleichtern. Beim Umspritzen mit einem thermisch plastifizierbaren und spritzgusstechnisch verarbeitbaren Kunststoffmaterial besteht normalerweise die Gefahr, dass bei magnetisierten Permanentmagneten eine thermisch bedingte Teil-Entmagnetisierung auftritt. Bei der vorliegenden Erfindung ist jedoch vorgesehen diese Umspritzung vor der Magnetisierung der Permanentmagnetstücke vorzunehmen. Auf diese Weise kann es nicht zu der genannten Teil-Entmagnetisierung kommen.

Die weniger feste mechanische Verbindung ist zweckmäßigerweise eine Spiel- oder Übergangspassung. Hierbei kommt es in erster Linie auf eine einfache Montierbarkeit und weniger auf eine ausgesprochen feste Verbindung an. Die Verbindung soll gerade so ausgelegt sein, dass es nicht zu Vibrationen und unerwünschten Geräuschen oder ein Wandern der Magnete kommen kann. Auch der magnetische Widerstand soll nach Möglichkeit nicht durch eine zu großzügige Auslegung negativ verändert werden.

Die Festigkeit einer Verbindung zwischen Rotorbaugruppen (6), bestehend aus Teilkern (5) und montierten Permanentmagnetstücken (9), kann durch eine feste Verbindung der Teilkerne (5) mit einer Rotorwelle (28) erreicht werden. Dies kann eine übliche Pressverbindung sein oder eine andere aus dem Stand der Technik bekannte Verbindungsart, wie Schweißen oder Kleben.

Generell kann eine Verbindung der Permanentmagnetstücke (9) mit einer Magnetaufnahme (3, 4) durch sich verbiegende Blechzungen erfolgen. Hierbei ist vorgesehen, dass beim fertig montierten Permanentmagnetrotor die Blechzungen der aneinander anschließenden Teilkerne (5) in jeweils entgegengesetzter Richtung ausgelenkt sind. Die gleiche Technik kann auch auf die Verbindung der Teilkerne (5) mit der Rotorwelle (28) übertragen werden.

Die Teilkerne selbst bestehen entweder aus gepresstem Metallpulver oder aus Blechpaketen, welche insbesondere mittels Stanzpaketierungsverfahren hergestellt sind. Dabei sind die Bleche untereinander bereits durch in Rücksprünge gepresste Vorsprünge miteinander verbunden. Bei einer Umspritzung der Permanentmagnetstücke lassen sich die Einzelbleche des Blechpakets zusätzlich fixieren, gleiches gilt für eine Verklebung und andere Verbindungsarten.

Besonders vorteilhaft ist es die Teilkerne (5) und/oder zwei Rotorbaugruppen (6), bestehend aus je einem Teilkern (5) und mehreren darin gefügten Permanentmagnetstücken (9) identisch oder nahezu identisch auszubilden, wobei in jeder zweiten Magnetaufnahme ein Permanentmagnetstück (9) aufgenommen ist. Auch die Magnetisierung ist vorzugsweise identisch oder nahezu identisch (bei gleicher geometrischer Anordnung). Wird eine Rotorbaugruppe (6) um 180° gedreht kehrt sich die Magnetisierung der Permanentmagnetstücke (9) entsprechend um und entspricht bei miteinander gefügten Teilkernen (5) N-N oder S-S, so dass die Feldlinien auf gewünschte Art radial ausweichen und ausgeprägte Rotorpole bilden.

Alternativ kann der Permanentmagnetrotor dadurch montiert werden, dass zwei magnetisierte Rotorbaugruppen (6) gleichzeitig oder nacheinander auf eine Rotorwelle (28) gefügt und fest mit dieser verbunden werden, wobei die freien Teilabschnitte (8) der Permanentmagnetstücke (9) gleichzeitig oder anschließend in die weiten Magnetaufnahmen (4) des Teilkerns (5) der jeweils anderen Rotorbaugruppe (6) gefügt werden. Hierbei können die Rotorbaugruppen (6) über dasselbe Rotorende auf die Rotorwelle (28) gefügt werden oder eine Rotorbaugruppe (6) wird über ein erstes Rotorende und die andere Rotorbaugruppe (6) über ein zweites Rotorende aufgeschoben. Im letzteren Fall würden nachgiebige Blechzungen in entgegengesetzte Richtungen ausweichen und sich somit gegen eine Demontage der Rotorbaugruppen (6) in beide Richtungen sperren.

Die Permanentmagnetstücke (9) weisen einen sehr großen Überstand über das Teilpaket (5) auf. Dieser Umstand hat sehr große Vorteile für den Herstellungsprozess, weil dieser Überstand eine große Führungslänge darstellt. So lassen sich die Permanentmagnetstücke (9) und die Rotorbaugruppen (6) gut aufnehmen, halten und exakter positionieren, wobei Beschädigungen und Abrieb vermeidbar sind.

Die Aufgabe der Erfindung wird weiter durch ein Verfahren zur Herstellung eines Permanentmagnetrotors gelöst, bei welchem folgende Verfahrensschritte vorgesehen sind:
- Bereitstellen mehrerer unmagnetisierter Permanentmagnetstücke (9);
- Magnetisieren der Permanentmagnetstücke (9) in einer herkömmlichen Magnetisierungsvorrichtung;
- Bereitstellen eines Teilkerns (5) und mehrerer vormagnetisierter Permanentmagnetstücke (9);
- Fügen von mehreren magnetisierten Permanentmagnetstücken (9) mit einem Teilabschnitt (7) in jede zweite Magnetaufnahme (3) des Teilkerns (5), wodurch eine Rotorbaugruppe (6) hergestellt ist;

Das Vormagnetisieren einzelner Permanentmagnetstücke (9) ist aus dem Stand der Technik bekannt. Neu ist es diese Permanentmagnetstücke (9) mit einem Teilabschnitt (7) in nur jede zweite Magnetaufnahme (3) eines Teilkerns (5) zu fügen, wodurch eine Rotorbaugruppe (6) hergestellt ist. Da die Permanentmagnetstücke (9) nur über einen Teil ihrer Länge in dem Teilkern fest eingefügt wird, kann der verbleibende Teil für die Montage einfacher gehalten und/oder geführt werden. Für einen sicheren Halt der Permanentmagnetstücke (9) genügt es, wenn diese nur zum Teil fest mit einem Teilkern verbunden sind. Es ist jedoch einfacher unmagnetisierte Permanentmagnetstücke (9) zu fügen.

Die Aufgabe der Erfindung wird vorzugsweise durch ein verbessertes Verfahren zur Herstellung eines Permanentmagnetrotors gelöst, bei welchem folgende Verfahrensschritte vorgesehen sind:
- Bereitstellen eines Teilkerns (5) und mehrerer Permanentmagnetstücke (9);
- Fügen von mehreren unmagnetisierten Permanentmagnetstücken (9) mit einem Teilabschnitt (7) in jede zweite Magnetaufnahme (3) des Teilkerns (5), wodurch eine Rotorbaugruppe (6) hergestellt ist;
- Einführen der Rotorbaugruppe (6) in eine Magnetisierungsvorrichtung (20), wobei Magnetisierungsspulen (10) in nicht mit Permanentmagnetstücken (9) belegte Magnetaufnahmen (4) des Teilkerns (5) der Rotorbaugruppe (6) geführt werden und freie Teilabschnitte (8) der Permanentmagnetstücke (9), welche aus dem Teilkern (5) vorspringen und in Magnetfreisparungen (23) eines Magnetisierungsrückschlusses (19) der Magnetisierungsvorrichtung (20) eingeführt werden;
- Gleichzeitiges Magnetisieren beider Teilabschnitte (7, 8) der Permanentmagnetstücke (9);
- Auswerfen der Rotorbaugruppe (6) aus der Magnetisierungsvorrichtung (20).

Durch das erfindungsgemäße Verfahren lassen sich die Permanentmagnetstücke auf einfache Weise maximal magnetisieren, insbesondere wenn die Permanentmagnetstücke aus Seltenerdmaterial, z. B. NdFeB bestehen.

Das Fügen von Permanentmagnetstücken (9) in jede zweite Magnetaufnahme (3) eines Teilkerns (5) erfolgt wie vorher erwähnt entweder durch Einpressen, Einklemmen, Umspritzen, Kleben oder durch eine Kombination mehrerer dieser Möglichkeiten. Hierdurch ist eine Rotorbaugruppe (6) hergestellt.

Durch Einführen der Rotorbaugruppe (6) in eine Magnetisierungsvorrichtung (20), wobei Magnetisierungsspulen (10) in nicht mit Permanentmagnetstücken (9) belegte Magnetaufnahmen (4) des Teilkerns (5) der Rotorbaugruppe (6) geführt werden und freie Teilabschnitte (8) der Permanentmagnetstücke (9), welche aus dem Teilkern (5) vorspringen und in Magnetfreisparungen (23) eines Magnetisierungsrückschlusses (19) der Magnetisierungsvorrichtung (20) eingeführt werden, können beide Teilabschnitte (7, 8) der Permanentmagnetstücke (9) gleichzeitig magnetisiert werden. Die Magnetisierungsrichtung ist dabei tangential ausgerichtet und für jedes Permanentmagnetstück (9) gleich, so dass sich ein Ringmagnetfeld ergibt. Hierdurch ist eine hohe Magnetisierungsfeldstärke erreichbar.

Die magnetisierte Rotorbaugruppe (6) lässt sich einfach aus der Magnetisierungsvorrichtung (20) auswerfen.

Weiter ist vorgesehen, dass zwei Rotorbaugruppen (6) durch Fügen mehrerer freier Teilabschnitte (8) der mehreren Permanentmagnetstücke (9) in mehrere freie Magnetaufnahmen (4) des jeweils anderen Teilkerns (5) zusammengesetzt werden. Hierzu liegen in einem Zwischenschritt zwei Teilkerne (5) mit jeweils zur Hälfte oder im Wesentlichen zur Hälfte montierten Permanentmagnetstücken vor, wobei sich jeweils eine belegte Magnetaufnahme (3) mit einer unbelegten Magnetaufnahme (4) abwechselt. Die vormontierten Teilkerne ähneln Klauenkupplungen, die sich ineinander fügen lassen.

Die Rotorbaugruppen (6) können durch verschiedene Maßnahmen eine feste Verbindung miteinander eingehen. Eine sehr einfache Möglichkeit besteht darin, beide Rotorbaugruppen (6) zusammen auf eine Rotorwelle (28) aufzupressen oder auf eine andere bekannte Weise mit der Rotorwelle (28) zu verbinden, z. B. durch Schweißen.

Eine Verbindung mit der Rotorwelle (28) können die beiden magnetisierten Rotorbaugruppen (6) auch ohne vorherige Verbindung beider Rotorbaugruppen vorgenommen werden. Es ist denkbar die Rotorbaugruppen (6) gleichzeitig oder nacheinander auf eine Rotorwelle (28) zu fügen und fest mit dieser zu verbinden, wobei die freien Teilabschnitte (8) der Permanentmagnetstücke (9) gleichzeitig oder an einen ersten Verfahrensschritt anschließend in die noch freien Magnetaufnahmen (4) des Teilkerns (5) der jeweils anderen Rotorbaugruppe (6) gefügt werden.

Die Aufgabe wird schließlich auch durch die Merkmale des Anspruchs 14 gelöst. Es ist eine Magnetisierungsvorrichtung (20) mit einem Magnetisierungsrückschluss (19) mit 2n Magnetfreisparungen (23), n Magnetisierungsspulen (10) vorgesehen, welche in jeder zweiten Magnetfreisparung (23) aufgenommen sind, wobei ein großer Teil der Magnetisierungsspulen (10) axial aus dem Magnetisierungsrückschluss (19) ragt und einem Niederhalter (21), welcher zwischen zumindest zwei Magnetisierungsspulen (10) angeordnet ist. Die erfindungsgemäße Magnetisierungsvorrichtung eignet sich insbesondere für die Erzeugung von starken Rotormagnetfeldern, weil die Magnetisierungsspulen optimal an die zu magnetisierenden Permanentmagnetstücke angeordnet werden können. Weiter lassen sich hierdurch Magnete nach einer Teilmontage magnetisieren, wodurch der Herstellprozess deutlich erleichtert ist.

Es ist vorgesehen, dass die Magnetisierungsspulen (10) über zumindest einen gleich großen Teil axial aus dem Magnetisierungsrückschluss (19) ragen, die in dem Magnetisierungsrückschluss (19) aufgenommen sind. Hierdurch lässt sich durch die Kombination zweiter Teilkerne ein Permanentmagnetrotor zusammensetzen.

Zweckmäßigerweise wird angestrebt, dass die Magnetisierungsspulen (10) über einen deutlich größeren Teil axial aus dem Magnetisierungsrückschluss (19) ragen, die in dem Magnetisierungsrückschluss (19) aufgenommen sind. Auf diese Weise lässt sich mit einer einzigen Magnetisierungsvorrichtung oder eines Typs einer Magnetisierungsvorrichtung eine Vielzahl von unterschiedlich langen Permanentmagnetrotoren, Rotorbaugruppen (6) und Teilkerne (5) magnetisieren. Mit den längeren Magnetisierungsspulen (10) muss auch der Niederhalter entsprechend in seinen Abmessungen angepasst sein.

Für eine stabile Magnetisierungsvorrichtung sorgt eine feste Verbindung der Magnetisierungskerne (14) mit einer Spulenträgerplatte (34). Die Verbindung kann durch eine Verschraubung hergestellt sein und vor oder nach der Montage eines Spulendrahtes erfolgen, je nach geometrischer Ausbildung der Spulen. Auch andere Verbindungsarten, wie Löten oder pressen sind möglich.

Es ist vorteilhaft, dass die Magnetisierungsspulen (10) auf Magnetisierungskerne (24) gewickelt sind, welche aus einem magnetisch leitenden Stahlmaterial bestehen, wobei ein Spulendraht in eine rillenartige Nut am Umfang der Magnetisierungskerne (24) formschlüssig eingepasst ist. Das Stahlmaterial leitet den magnetischen Fluss besonders gut und die Einpassung des Spulendrahts sorgt dafür, dass die beim Magnetisierungsvorgang auftretenden Kräfte auf den Spulendraht vom umgebenden Stahlmaterial aufgenommen werden können.

Dennoch kann es sinnvoll sein den Spulendraht in der rillenartigen Nut durch Kleben, oder durch eine UV-härtende Vergussmasse oder eine Kombination dieser Verfahren zusätzlich zu sichern.

Die Magnetisierungsspulen (10) besitzen Anschlüsse (26), welche in einer Basis (18) der Magnetisierungsvorrichtung (20) vergossen sind. Hierdurch sind die Anschlüsse und die Verbindungsdrähte zwischen den Spulen gegen Auslenken und damit vor einem Ermüdungsbruch gesichert. Die Basis (18) kann auch als Befestigungsflansch dienen.

Ausführungsbeispiele der Erfindung werden nachfolgend anhand der Zeichnung näher erläutert. Es zeigen:
- Fig. 1: einen erfindungsgemäßen Permanentmagnetrotor,
- Fig. 2: einen ersten Teilkern mit vormontierten Permanentmagnetstücken,
- Fig. 3: einen zweiten Teilkern mit vormontierten Permanentmagnetstücken,
- Fig. 4: einen fertig montierten Permanentmagnetrotor,
- Fig. 5: einen Teilkern mit Magnetisierungsspulen,
- Fig. 6: eine leere Magnetisierungsvorrichtung,
- Fig. 7: eine bestückte Magnetisierungsvorrichtung und
- Fig. 8: eine geschlossene Magnetisierungsvorrichtung.

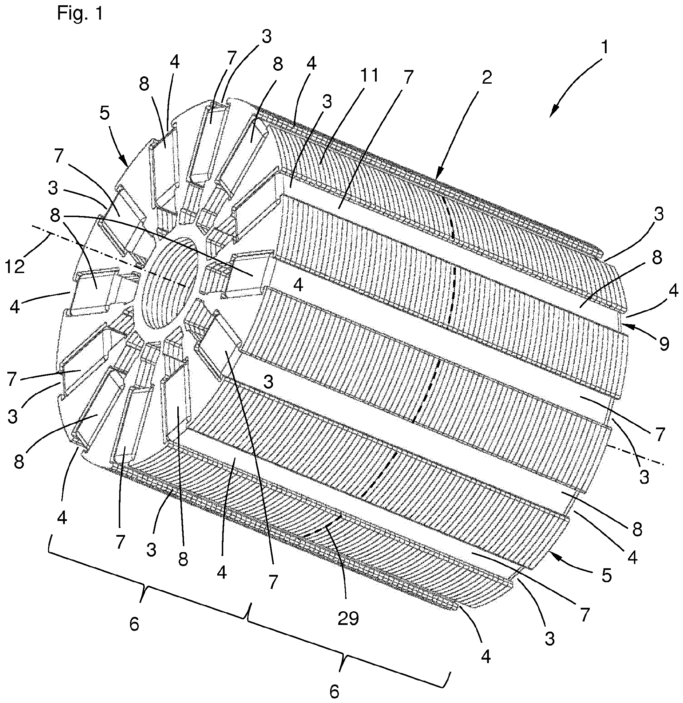

Fig. 1 zeigt einen Permanentmagnetrotor 1 (ohne Rotorwelle), mit einer Rotordrehachse 12, einem Magnetkern 2 und in Magnetaufnahmen 3, 4 montierten Permanentmagnetstücken 9. Der Magnetkern 2 ist aus zwei identischen Teilkernen 5 axial zusammengesetzt (siehe Trennlinie 29). Die Permanentmagnetstücke 9 sind jeweils mit einem ersten Teilabschnitt 7 in Magnetaufnahmen 3 eines Teilkerns 5 und mit einem zweiten Teilabschnitt 8 in Magnetaufnahmen 4 eines zweiten Teilkerns 5 aufgenommen. In jeder zweiten Magnetaufnahme 3 beider Teilkerne 5 sind die ersten Teilabschnitte 7 mit einer Presspassung montiert und in den übrigen Magnetaufnahmen 4 mit einer Spiel- oder Übergangspassung. Jeder Teilkern 5 bildet mit mehreren Permanentmagnetstücken 9 eine Rotorbaugruppe 6. In Fig. 1 sind zwölf Permanentmagnetstücke 9 gezeigt, wobei jeweils sechs Permanentmagnetstücke mit einem Teilkern 5 eine Rotorbaugruppe 6 bilden. Zwei im Rahmen der Herstell- und Montagegenauigkeit identische Rotorbaugruppen 6 sind miteinander verschränkt und zu einem Permanentmagnetrotor (hier ohne Rotorwelle) verbunden. Die Festigkeit der Verbindung ist für die Handhabung bei der Montage ausreichend, sie wird später durch Verbindung mit einer Rotorwelle auch für den Betrieb ausreichend erhöht.

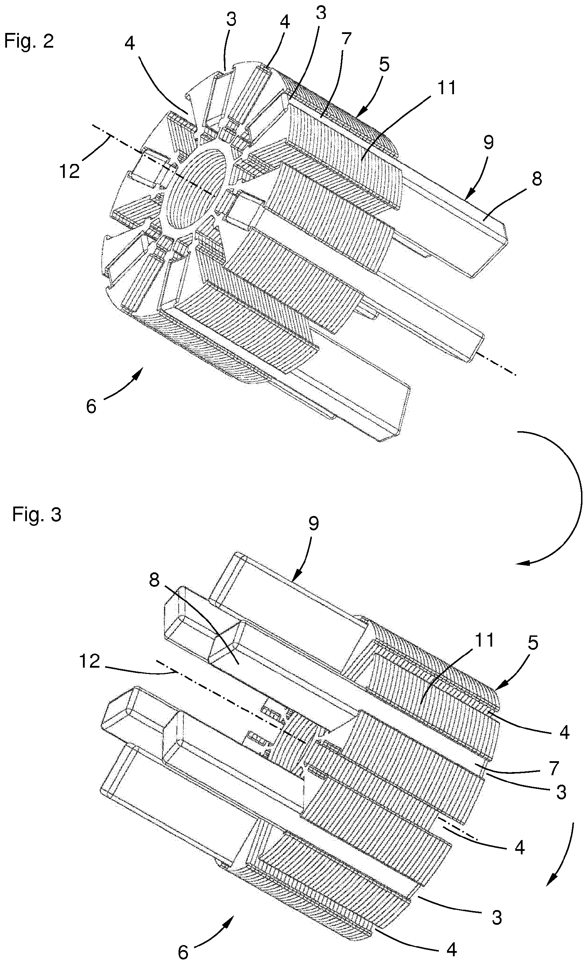

Fig. 2 zeigt die Rotorbaugruppe 6 vor ihrer Montage, bestehend aus einem Teilkern 5, mit einer Vielzahl von um eine Rotordrehachse 12 angeordnete Magnetaufnahmen 3, 4 wobei nur in jeder zweiten Magnetaufnahme 3 ein Permanentmagnetstück 9 aufgenommen und befestigt ist. Die Permanentmagnetstücke 9 und der Teilkern 5 sind sehr fest miteinander verbunden (Presspassung). Die vormontierte Rotorbaugruppe ähnelt einer Klauenkupplung, wobei die Permanentmagnetstücke 9 etwa bis zur Hälfte ihrer Länge in den Magnetaufnahmen 3 aufgenommen sind (Teilabschnitte 7) und die andere Hälfte der Permanentmagnetstücke 9 (Teilabschnitte 8) sich frei achsparallel aus dem Teilkern 5 erstrecken. Die Permanentmagnetstücke 9 sind tangential magnetisiert. Weiter sind Teilpole 11 dargestellt, welche zwischen jeweils zwei Magnetaufnahmen 3 und 4 angeordnet sind. Die Teilpole 11 sind einstückige Bestandteile des Teilkerns 5, welcher aus einem stanzpaketierten Blechpaket besteht. Freie Magnetaufnahmen 4 sind geringfügig breiter als die mit Permanentmagnetstücken 9 belegten Magnetaufnahmen 3. Die Breite der freien Magnetaufnahmen 4 ist so bemessen, dass sie mit den Permanentmagnetstücken 9 eine Spiel- oder Übergangspassung eingehen können.

Fig. 3 zeigt eine zweite Rotorbaugruppe 6 mit vormontierten Permanentmagnetstücken 9. Die Permanentmagnetstücke weisen erste Teilabschnitte 7 auf, welche fest in Magnetaufnahmen 3 aufgenommen sind und zweite Teilabschnitte 8, welche sich achsparallel aus dem Teilpaket 5 erstrecken. Die Permanentmagnetstücke 9 sind tangential magnetisiert. Die zweite Rotorbaugruppe 6 ist im Rahmen der Herstell- und Montagegenauigkeit identisch mit der ersten Rotorbaugruppe 6 aus Fig. 2. Durch eine Drehung der Rotordrehachse 12 der Rotorbaugruppe 6 aus Fig. 2 um 180° und ein Verschwenken der Rotorbaugruppe 6 um eine Polteilung (hier um 30°) um die Rotordrehachse 12 ergibt sich die geometrische Anordnung einer zweiten Rotorbaugruppe 6 gemäß Fig. 3, die mit der ersten Rotorbaugruppe 6 gefügt werden kann. Beide Rotorbaugruppen sind einschließlich ihrer Magnetisierung identisch. Durch die genannte Drehung ist die Magnetisierungsrichtung der Permanentmagnetstücke 9 aus Fig. 3 in der beschriebenen Anordnung gegensinnig zur Magnetisierungsrichtung der Permanentmagnetstücke 9 aus Fig. 2, so dass die Magnetfeldlinien sich im montierten Zustand gegenseitig abstoßen und in radialer Richtung umgelenkt werden. Die Teilpole 11 sind einstückig mit dem Teilkern 5 und befinden sich zwischen zwei Magnetaufnahmen 3 und 4. Freie Magnetaufnahmen 4 sind geringfügig breiter als die mit Permanentmagnetstücken 9 belegten Magnetaufnahmen 3. Die Breite der freien Magnetaufnahmen 4 ist so bemessen, dass sie mit den Permanentmagnetstücken 9 eine Spiel- oder Übergangspassung eingehen können.

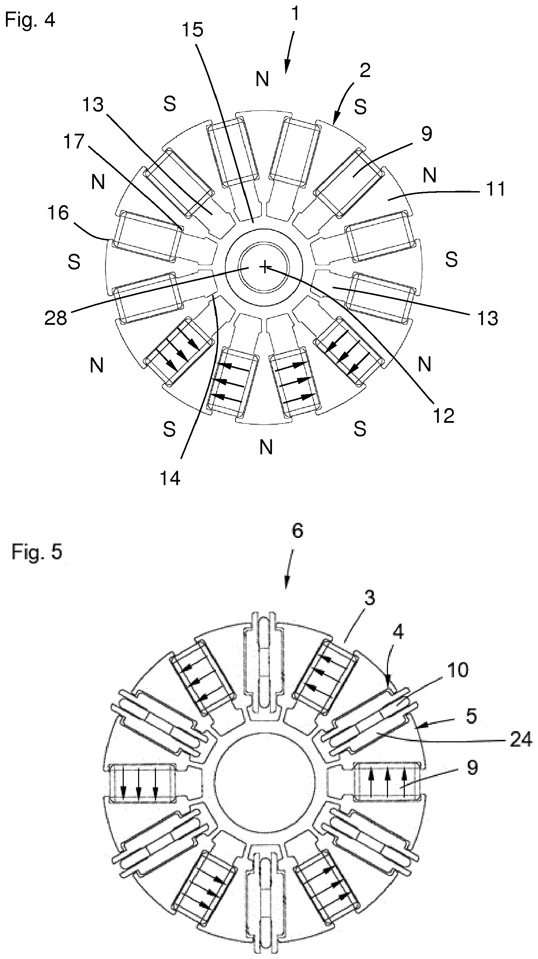

Fig. 4 zeigt einen fertig montierten Permanentmagnetrotor 1, mit dem zusammengesetzten Magnetkern 2, den Permanentmagnetstücken 9 und einer Rotorwelle 28, auf welcher der Magnetkern 2 aufgepresst ist. Der Magnetkern 2 weist radial innerhalb der Permanentmagnetstücke 9 Freisparungen 13 auf, welche dazu dienen magnetische Kurzschlüsse zu unterbinden. Deutlich sind die tangentiale Magnetisierung (nur partiell angedeutet) und die daraus resultierende Polung zu erkennen. Zwischen den Freisparungen 13 sind Stege 14 als Verbindungsbereiche zwischen einem zentralen Ring 15 und den Polen 11 vorgesehen. Vorsprünge 16 und Anschläge 17 halten die Permanentmagnetstücke radial in Position.

Fig. 5 zeigt eine Rotorbaugruppe 6 mit einem Teilkern 5, mit auf Magnetisierungskernen 24 gewickelten Magnetisierungsspulen 10, welche in jeder freien Magnetaufnahme 4 (= jede zweite Magnetaufnahme) angeordnet sind. In den übrigen Magnetaufnahmen 3 sind die Permanentmagnetstücke 9 durch eine Presspassung befestigt. Da jeweils nur jedes zweite Permanentmagnetstück 9 eingepresst ist, liegt eine N-S-N-S-Reihenfolge vor. Dies erlaubt eine Magnetisierungsrichtung, die einer Ringspule entspricht.

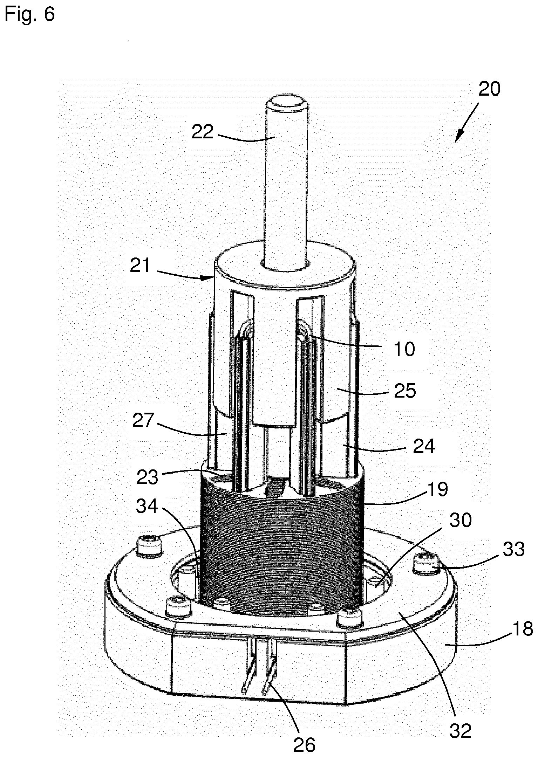

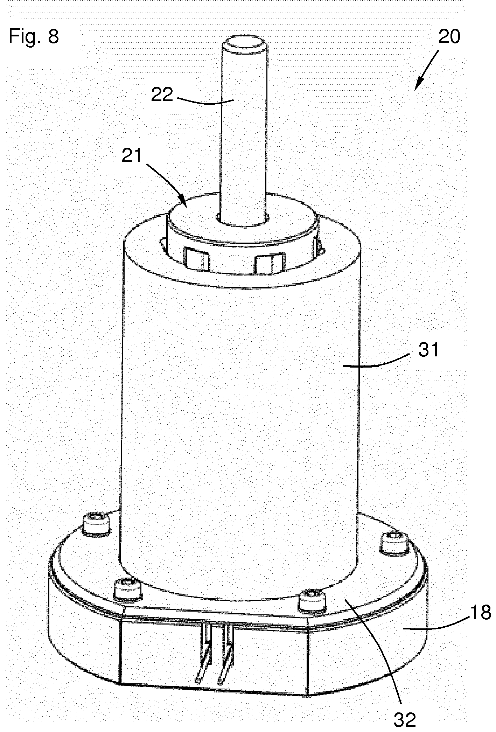

Fig. 6 zeigt eine Magnetisierungsvorrichtung 20, mit einer Basis 18, einer Spulenträgerplatte 34, einem Ringdeckel 32, einem Niederhalter 21, einem Auswerfer 22 und einem Magnetisierungsrückschluss 19, in welchem mehrere Magnetisierungskerne 24 mit jeweils einer Magnetisierungsspule 10 aufgenommen sind. Zwischen den Magnetisierungskernen 24 sind im Magnetisierungsrückschluss 19 Magnetfreisparungen 23 vorgesehen, welche zur Aufnahme von Teilabschnitten 8 der Permanentmagnetstücke 9 dienen (siehe Fig. 2 u. 3). Die Magnetisierungsspulen 10 sind über Anschlüsse 26 mit einer Spannungsquelle verbindbar. Der Niederhalter 21 weist Niederhaltefingern 25 auf und dient als Fixiermittel für eine Rotorbaugruppe 6 (hier nicht dargestellt - siehe Fig. 2 u. 3). Der Niederhalter 21 ist über einen Auswerfer 22 geschoben, mit dessen Hilfe die magnetisierte Rotorbaugruppe aus der Magnetisierungsvorrichtung 20 entnommen werden kann. Hierzu weist der Auswerfer 22 an seinem Ende einen Abschnitt mit vergrößertem Durchmesser auf (nicht erkennbar). Der Ringdeckel 32 ist mittels Deckelschrauben 33 mit der Basis 18 verbunden. Ein Aufnahmeraum 27 dient zur Aufnahme der Rotorbaugruppe. Die bei der Magnetisierung auftretenden Kräfte werden in Axialrichtung von dem Niederhalter 21 aufgenommen. Gehäuseschrauben 30 dienen zur Befestigung eines Gehäuses 31 (siehe Fig. 8) an der Spulenträgerplatte 34. Der Magnetisierungsrückschluss 19 ist auf der Spulenträgerplatte 34 befestigt (hier durch Kleben). Die Magnetisierungskerne 24 sind mit der Spulenträgerplatte 34 fest verbunden (hier: verschraubt). Die Magnetisierungsspulen bestehen aus einer geringen Anzahl von Windungen, die passend in rillenartigen Nuten der Magnetisierungskerne 24 aufgenommen sind, so dass die Windungen radial fixiert sind. Als zusätzliche Sicherung sind die Windungen mit einem Kunststoffmaterial umspritzt. Hohlräume zwischen der Basis 18 und der Spulenträgerplatte 34 sind vergossen, um den Wicklungsdraht, insbesondere im Verbindungsbereich, zwischen den einzelnen Magnetisierungsspulen und den Anschlüssen zu fixieren. Die Niederhaltefinger 25, die Magnetisierungsspulen 10 und die Magnetisierungskerne 24 sind länger als erforderlich ausgeführt, so dass unterschiedliche Rotorbaugruppen mit derselben Magnetisierungsvorrichtung magnetisierbar sind.

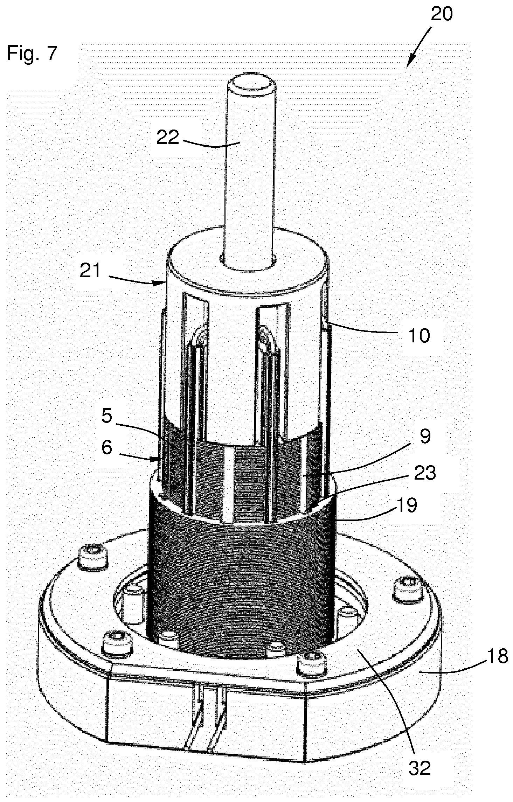

Fig. 7 zeigt die Magnetisierungsvorrichtung 20, mit der Basis 18, dem Ringdeckel 32, dem Auswerfer 22, dem Magnetisierungsrückschluss 19, Magnetisierungsspulen 10 und dem Niederhalter 21. Innerhalb der Magnetisierungsvorrichtung 20 ist eine Rotorbaugruppe 6 mit Teilkern 5 und Permanentmagnetstücken 9 aufgenommen. Die Permanentmagnetstücke 9 sind einerseits im Teilkern 5 eingepresst und ragen andererseits in Magnetfreisparungen 23 (siehe auch Fig. 6). Die Permanentmagnetstücke 9 sind sowohl in ihrem ersten Abschnitt, der sich im Teilkern 5 befindet als auch mit ihrem zweiten Abschnitt, der sich in den Magnetfreisparungen 23 befindet gleichzeitig durch ein ringförmiges um die Rotordrehachse 12 verlaufendes (siehe Fig. 1 bis 4) Magnetfeld magnetisierbar (siehe auch Fig. 5).

Fig. 8 zeigt eine geschlossene Magnetisiervorrichtung 20, mit einem hülsenartigen Gehäuse 31, der Spulenträgerplatte 34, der Basis 18, dem Niederhalter 21 und dem Auswerfer 22, durch welchen die magnetisierte Rotorbaugruppe axial aus dem Gehäuse 31 herausziehbar ist. Das Gehäuse ist in Form eines Kühlmantels ausgebildet, welches zur Kühlung der Magnetisierungsspulen an einen Kühlkreislauf anschließbar ist (Anschlüsse für ein Kühlmedium sind nicht dargestellt).

**Bezugszeichenliste**

| | | | |
|---|---|---|---|
| 1 | Permanentmagnetrotor | 24 | Magnetisierungskern |
| 2 | Magnetkern | 25 | Niederhaltefinger |
| 3 | enge Magnetaufnahme | 26 | Anschlüsse |
| 4 | weite Magnetaufnahme | 27 | Aufnahmeraum |
| 5 | Teilkern | 28 | Rotorwelle |
| 6 | Rotorbaugruppe | 29 | Trennlinie |
| 7 | eingepresster Teilabschnitt | 30 | Gehäuseschraube |
| 8 | freier Teilabschnitt | 31 | Gehäuse |
| 9 | Permanentmagnetstück | 32 | Ringdeckel |
| 10 | Magnetisierungsspule | 33 | Deckelschraube |
| 11 | Teilpol | 34 | Spulenträgerplatte |
| 12 | Rotordrehachse | | |
| 13 | Freisparung | | |
| 14 | Steg | | |
| 15 | Ring | | |
| 16 | Vorsprung | | |
| 17 | Anschlag | | |
| 18 | Basis | | |
| 19 | Magnetisierungsrückschluss | | |
| 20 | Magnetisierungsvorrichtung | | |
| 21 | Niederhalter | | |
| 22 | Auswerfer | | |
| 23 | Magnetfreisparung | | |

## Patentansprüche

1. Permanentmagnetrotor (1) mit einem magnetisch leitenden Magnetkern (2), welcher eine Mehrzahl Magnetaufnahmen (3, 4) für radial angeordnete und im Wesentlichen tangential magnetisierte Permanentmagnetstücke (9) hat, **dadurch gekennzeichnet, dass** der Magnetkern (2) axial aus mehreren Teilkernen (5) zusammengesetzt ist und die Permanentmagnetstücke (9) sich über mehr als einen Teilkern (5) erstrecken.

2. Permanentmagnetrotor nach Anspruch 1, **dadurch gekennzeichnet, dass** ein Permanentmagnetstück (9) mit einem ersten Teilkern (5) eine festere mechanische Verbindung eingeht als mit einem zweiten Teilkern (5).

3. Permanentmagnetrotor nach Anspruch 2, **dadurch gekennzeichnet, dass** mehrere Permanentmagnetstücke (9) über den Umfang eines Teilkerns (5) in unterschiedlichen Magnetaufnahmen (3, 4) angeordnet sind und abwechselnd eine festere und eine weniger feste mechanische Verbindung mit demselben Teilkern (5) eingehen.

4. Permanentmagnetrotor nach Anspruch 2 oder 3, **dadurch gekennzeichnet, dass** die festere mechanische Verbindung durch Umspritzung, durch Kleben, durch Einpressen (Presspassung) oder durch Einklemmen hergestellt ist.

5. Permanentmagnetrotor nach Anspruch 2, 3 oder 4, **dadurch gekennzeichnet, dass** die weniger feste mechanische Verbindung eine Spiel- oder eine Übergangspassung ist.

6. Permanentmagnetrotor nach zumindest einem der vorangehenden Ansprüche, **dadurch gekennzeichnet, dass** die Teilkerne (5) auf einer Rotorwelle (28) angeordnet und mit dieser fest verbunden sind.

7. Permanentmagnetrotor nach zumindest einem der vorangehenden Ansprüche **dadurch gekennzeichnet, dass** die Teilkerne (5) aus Blechpaketen oder aus gepresstem Metallpulver bestehen.

8. Permanentmagnetrotor nach zumindest einem der vorangehenden Ansprüche, **dadurch gekennzeichnet, dass** die Teilkerne (5) und/oder zwei Rotorbaugruppen (6), bestehend aus je einem Teilkern (5) und mehreren darin gefügten Permanentmagnetstücken (9), identisch oder nahezu identisch ausgebildet sind.

9. Verfahren zur Herstellung eines Permanentmagnetrotors (1) mit einem magnetisch leitenden Magnetkern (2), welcher eine Mehrzahl Magnetaufnahmen (3, 4) für radial angeordnete und im Wesentlichen tangential magnetisierte Permanentmagnetstücke (9) hat, **gekennzeichnet durch** folgende Verfahrensschritte:
- Bereitstellen mehrerer unmagnetisierter Permanentmagnetstücke (9);
- Magnetisieren der Permanentmagnetstücke (9) in einer herkömmlichen Magnetisierungsvorrichtung;
- Bereitstellen eines Teilkerns (5) und mehrerer vormagnetisierter Permanentmagnetstücke (9);
- Fügen von mehreren magnetisierten Permanentmagnetstücken (9) mit einem Teilabschnitt (7) in jede zweite Magnetaufnahme (3) des Teilkerns (5), wodurch eine Rotorbaugruppe (6) hergestellt ist;

10. Verfahren zur Herstellung eines Permanentmagnetrotors (1) mit einem magnetisch leitenden Magnetkern (2), welcher eine Mehrzahl Magnetaufnahmen (3, 4) für radial angeordnete und im Wesentlichen tangential magnetisierte Permanentmagnetstücke (9) hat, **gekennzeichnet durch** folgende Verfahrensschritte:
- Bereitstellen eines Teilkerns (5) und mehrerer Permanentmagnetstücke (9);
- Fügen von mehreren unmagnetisierten Permanentmagnetstücken (9) mit einem Teilabschnitt (7) in jede zweite Magnetaufnahme (3) des Teilkerns (5), wodurch eine Rotorbaugruppe (6) hergestellt ist;
- Einführen der Rotorbaugruppe (6) in eine Magnetisierungsvorrichtung (20), wobei Magnetisierungsspulen (10) in nicht mit Permanentmagnetstücken (9) belegte Magnetaufnahmen (4) des Teilkerns (5) der Rotorbaugruppe (6) eingeführt werden und freie Teilabschnitte (8) der Permanentmagnetstücke (9), welche aus dem Teilkern (5) vorspringen und in Magnetfreisparungen (23) eines Magnetisierungsrückschlusses (19) der Magnetisierungsvorrichtung (20) eingeführt werden;
- Gleichzeitiges Magnetisieren beider Teilabschnitte (7, 8) der Permanentmagnetstücke (9);
- Auswerfen der Rotorbaugruppe (6) aus der Magnetisierungsvorrichtung (20).

11. Verfahren zur Herstellung eines Permanentmagnetrotors nach Anspruch 9 oder 10, **gekennzeichnet durch** folgenden Verfahrensschritt:
Zusammensetzen zweier Rotorbaugruppen (6) durch Fügen der freien Teilabschnitte (8) der mehreren Permanentmagnetstücke (9) beider Rotorbaugruppen (6) in die freien Magnetaufnahmen (4) des Teilkerns (5) der jeweils anderen Rotorbaugruppe (6).

12. Verfahren zur Herstellung eines Permanentmagnetrotors nach Anspruch 9, 10 oder 11, **gekennzeichnet durch** folgenden Verfahrensschritt: Fügen der Rotorbaugruppen (6) auf eine Rotorwelle (28) und festes Verbinden mit dieser.

13. Verfahren zur Herstellung eines Permanentmagnetrotors nach Anspruch 9 oder 10, **dadurch gekennzeichnet, dass** zwei magnetisierte Rotorbaugruppen (6) gleichzeitig oder nacheinander auf eine Rotorwelle (28) gefügt und fest mit dieser verbunden werden, wobei die freien Teilabschnitte (8) der Permanentmagnetstücke (9) gleichzeitig oder anschließend in die weiten Magnetaufnahmen (4) des Teilkerns (5) der jeweils anderen Rotorbaugruppe (6) gefügt werden.

14. Vorrichtung zur Magnetisierung eines Permanentmagnetrotors (1) mit einem magnetisch leitenden Magnetkern (2), welcher eine Mehrzahl Magnetaufnahmen (3, 4) für radial um eine Rotordrehachse (12) des Permanentmagnetrotors angeordnete und im Wesentlichen tangential zu magnetisierende Permanentmagnetstücke (9) hat, **gekennzeichnet durch** einen Magnetisierungsrückschluss (19) mit 2n Magnetfreisparungen (23), n Magnetisierungsspulen (10), welche in jeder zweiten Magnetfreisparung (23) aufgenommen sind, wobei ein großer Teil der Magnetisierungsspulen (10) axial aus dem Magnetisierungsrückschluss (19) ragt und mit einem Niederhalter (21), welcher zwischen zumindest zwei Magnetisierungsspulen (10) angeordnet ist.

15. Vorrichtung nach Anspruch 14, **dadurch gekennzeichnet, dass** die Magnetisierungsspulen (10) über zumindest einen gleich großen Teil axial aus dem Magnetisierungsrückschluss (19) ragen, die in dem Magnetisierungsrückschluss (19) aufgenommen sind.

16. Vorrichtung nach Anspruch 14 oder 15, **dadurch gekennzeichnet, dass** die Magnetisierungsspulen (10) über einen deutlich größeren Teil axial aus dem Magnetisierungsrückschluss (19) ragen, die in dem Magnetisierungsrückschluss (19) aufgenommen sind.

17. Vorrichtung nach Anspruch 14, 15 oder 16, **dadurch gekennzeichnet, dass** die Magnetisierungsspulen (10) auf Magnetisierungskerne (24) gewickelt sind, welche mit einer Spulenträgerplatte (34) fest verbunden sind.

18. Vorrichtung nach Anspruch 14, 15, 16 oder 17, **dadurch gekennzeichnet, dass** die Magnetisierungsspulen (10) auf Magnetisierungskerne (24) gewickelt sind, welche aus einem magnetisch leitenden Stahlmaterial bestehen, wobei ein Spulendraht in eine rillenartige Nut am Umfang der Magnetisierungskerne (24) formschlüssig eingepasst ist.

19. Vorrichtung nach Anspruch 14, 15, 16, 17 oder 18, **dadurch gekennzeichnet, dass** der Spulendraht in der rillenartigen Nut durch Kleben oder durch eine UV-härtende Vergussmasse gesichert ist.

20. Vorrichtung nach Anspruch 18 oder 19, **dadurch gekennzeichnet, dass** der Spulendraht in der rillenartigen Nut durch Umspritzen gesichert ist.

21. Vorrichtung nach zumindest einem der vorangehenden Ansprüche, **dadurch gekennzeichnet, dass** Anschlüsse (26) der Magnetisierungsspulen (10) in einer Basis (18) der Magnetisierungsvorrichtung (20) vergossen sind.
